# EUROPÄISCHE PATENTSCHRIFT

(11) **EP 0 570 851 B1**
(45) Veröffentlichungstag und Bekanntmachung des Hinweises auf die Patenterteilung: **12.02.1997**
(21) Anmeldenummer: 93107832.3
(22) Anmeldetag: 13.05.1993
(51) Int. Cl.: A22B 5/02, A22B 3/06

(54) **Schlachttier-Betäubungsbox**
Box for stunning animals to be slaughtered
Boîte pour anesthésier des animaux de boucherie

(30) Priorität: 14.05.1992 DE 4215977
(43) Veröffentlichungstag der Anmeldung: 24.11.1993
(73) Patentinhaber: Banss Maschinenfabrik GmbH & Co. KG, D-35216 Biedenkopf (DE)
(72) Erfinder: Burger, Josef, A-4600 Wels (AT)
(74) Vertreter: Klunker . Schmitt-Nilson . Hirsch

(56) Entgegenhaltungen:
- EP-A- 0 114 063
- EP-A- 0 396 148
- US-A- 3 051 984
- US-A- 3 135 017

## Beschreibung

Die vorliegende Erfindung betrifft eine Betäubungsbox für das Betäuben von Schlachttieren, insbesondere Schweinen, mit einem seitliche Begrenzungseinrichtungen sowie einen sich verjüngend begrenzten Kopfaufnahmebereich aufweisenden Aufnahmeraum zur Aufnahme eines Schlachttiers während des Betäubungsvorgangs, wobei zumindest eine Begrenzungseinrichtung auf eine andere gegenüberliegende Begrenzungseinrichtung zu bewegbar ist und die Begrenzungseinrichtungen in aufeinanderzu bewegtem Zustand eine nach unten aufeinanderzu laufende Kontur aufweisen. EP-A-0 396 148 offenbart eine solche Betäubungsbox.

Zur Betäubung einzelner Schlachttiere ist es bekannt, diese über einen sogenannten Treibgang nacheinander in eine Betäubungsboxen zu treiben und dort die Betäubung durchzuführen. Zur Durchführung der Betäubung wird eine mit Elektroden versehene elektrische Betäubungszange an den hierfür Vorgesehenen Punkten des Schlachttierkörpers angesetzt. Hierzu muß das jeweilige, in der Betäubungsbox befindliche Schlachttier immobilisiert sein. Zur Immobilisierung wird das Schlachttier durch eine die Bewegungsfreiheit des Schlachttiers in der Box kontinuierlich einschränkende, rückwärtige Abschlußwand mit seinem Kopf nach vorne in einen Kopfaufnahmebereich gedrängt. Danach kann die Betäubung zielsicher durchgeführt werden, indem etwa die Elektroden jeweils in dem Bereich oberhalb eines Auges des Schlachttieres angesetzt werden, so daß der Betäubungsstrom auf kürzestem Weg durch das Gehirn des Schlachttiers geleitet wird und die Betäubung innerhalb kürzester Zeit durchgeführt ist.

Um eine noch weitergehende Immobilisierung zu erreichen, ist es auch bekannt, eine seitliche Einklemmung des Schlachttieres in der Betäubungsbox vorzusehen. Hierzu ist es bekannt, die Seitenwände der Betäubungsbox keilförmig aufeinanderzu laufend auszubilden, so daß bei einer Abwärtsbewegung des Bodens der Betäubungsbox das Schlachttier in dem keilartig begrenzten Boxenraum nach unten rutscht und zwischen den Seitenwänden fest eingeklemmt ist.

Die bekannte, vorstehend geschilderte Betäubungsbox weist zwei Nachteile auf. Zum einen kann durch das Hineindrängen des Schlachttiers mit seinem Kopf in den Kopfaufnahmebereich durch die rückwärtige Abschlußwand eine Verschärfung der insbesondere bei Schweinen während des Schlachtvorgangs auftretenden Streßsituation eintreten. Bekanntlich reagiert der Organismus des Schweines auf solche Streßsituationen mit einer Erhöhung der Ausschüttung entsprechender Hormone, die zu einer Minderung der Fleisch qualität führen.

Zum anderen ist es wegen des Absenkens des Betäubungsboxbodens notwendig, daß das Schlachttier zuvor einen ansteigenden Treibgang hinaufgetrieben wird, um anschließend auf einen gegenüber dem Betäubungsboxboden tiefergelegenen Entbluteförderer ausgegeben werden zu können. Dieser Anstieg bedeutet für das Schlachttier Streß mit den bereits vorstehend geschilderten nachteiligen Folgen.

Der vorliegenden Erfindung liegt die Aufgabe zugrunde, eine Betäubungsbox verfügbar zu machen, die zu einer Entschärfung der Streßsituation für die Schlachttiere beiträgt.

Diese Aufgabe wird durch die Merkmale des Anspruchs 1 gelöst.

Bei der erfindungsgemäßen Betäubungsbox ist der zur Immobilisierung des Schlachttiers notwendige Kopfaufnahmebereich erst im zusammenbewegtem Zustand der seitlichen Begrenzungseinrichtungen ausgebildet. Daher ist es nicht notwendig, das Schlachttier nach vorne in einen für das Schlachttier sichtbar den Durchgang versperrenden Kopfaufnahmebereich hineinzudrängen, wodurch für das Schlachttier eine Streßsituation erzeugt wird. Bei der erfindungsgemäßen Betäubungsbox ist es vielmehr so, daß durch die Integration des Kopfaufnahmebereichs in die seitlichen Begrenzungseinrichtungen der Kopfaufnahmebereich beim Betreten der Betäubungsbox durch das Schlachttier für dieses subjektiv nicht vorhanden ist. Erst wenn das Schlachttier die Betäubungsbox betreten hat, werden die seitlichen Begrenzungen unter Bildung des Kopfaufnahmebereichs aufeinanderzu bewegt, und der Kopf des Schlachttiers wird sicher im Kopfaufnahmebereich aufgenommen.

Zur weitestgehenden Immobilisierung des Schlachttiers werden die Begrenzungseinrichtungen in aufeinanderzu bewegtem Zustand gegenüber der Einlaufebene, auf der das Schlachttier die Betäubungsbox betreten hat, angehoben. Hierdurch verliert das Schlachttier allmählich den Boden unter den Füßen und wird aufgrund des gegen die Begrenzungseinrichtungen drängenden Schlachttiergewichts sicher in der Betäubungsbox gehalten. Durch die Hubbewegung der Begrenzungseinrichtungen ist es nicht notwendig, den Treibgang ansteigend zu gestalten, damit das Schlachttier die für die Ausgabe auf den Entbluteförderer notwendige Höhe erreicht. Der Streß infolge der Anstrengung beim Aufstieg wird somit vermieden.

Durch die vorteilhafte Anordnung der Begrenzungseinrichtungen in einem Hubgestell mit zwei Standsäulen wird die erfindungsgemäße Betäubungsbox auch den für Schlachthöfe bestehenden hohen hygienischen Anforderungen gerecht. Infolge des lediglich auf die Standflächen der Standsäulen begrenzten Bodenkontakts der Betäubungsbox läßt sich der Betäubungsboxbereich im Schlachthof besonders einfach sauberhalten.

Durch die seitliche Anordnung des Hubgestells gemäß Anspruch 3 wird insbesondere der eigentliche Betäubungsvorgang durch die leichte Zugänglichkeit des Schlachttiers von oben erleichtert.

Bei einer vorteilhaften Ausführungsform gemäß Anspruch 4 ist eine der Begrenzungseinrichtungen mit dem Hubgestell verbunden, wohingegen die andere gegenüber dem Hubgestell und der ersten Begrenzungseinrichtung schwenkbar ist. Hierdurch wird eine kompakte Anordnung der Betäubungsbox ermöglicht und die Anzahl der beweglichen Teile auf das absolut Erforderliche reduziert.

Die vorteilhafte Anordnung der Schwenkachse gemäß Anspruch 5 oberhalb des Aufnahmeraums der Betäubungsbox sorgt dafür, daß der Bereich unterhalb der Begrenzungseinrichtungen frei bleibt. Dies begünstigt zum einen die Reinigung der Betäubungsbox, deren Verschmutzung vor allem im Bereich der Schlachttierbeine stattfindet, zum anderen kann auf diese Art und Weise das Schlachttier völlig ungehindert in den Aufnahmeraum der Betäubungsbox eintreten.

Bei einer bevorzugten Ausführungsform der Betäubungsbox gemäß Anspruch 6 ist die dem Hubgestell benachbarte Begrenzungseinrichtung über einen Führungsrahmen mit dem Hubgestell verbunden. Hierdurch erfolgt zum einen eine sichere Führung der Betäubungsbox während der Hubbewegung. Zum anderen ermöglicht der Führungsrahmen einen sicheren Kraftangriff, um die Betäubungsbox gegenüber dem Hubgestell anzuheben.

Der Führungsrahmen kann mit zumindest einem Ausleger versehen sein, zur Ausbildung der Schwenkachse oberhalb des Aufnahmeraums, um die die schwenkbare Begrenzungseinrichtung schwenkbar ist.

Vorteilhafterweise ist die schwenkbare Begrenzungseinrichtung mit zumindest einem Doppelhebel versehen, der schwenkbar am Ausleger des Führungsrahmens angelenkt ist. Das freie Ende des Doppelhebels kann dabei durch eine am Führungsrahmen angelenkte Kolben-Zylinder-Einheit beaufschlagt werden, um eine einfache, durch die Hebelwirkung kräftesparende Verschwenkung der verschwenkbaren Begrenzungseinrichtung zu ermöglichen.

Zur Auf-und-Ab-Bewegung des Führungsrahmens erweist es sich als vorteilhaft, wenn im Hubgestell eine weitere Kolben-Zylinder-Einheit vorgesehen ist.

Hierdurch ist sowohl die Verschwenkung der verschwenkbaren Begrenzungseinrichtung als auch die Hubbewegung beider Begrenzungseinrichtungen durch Krafteinrichtungen möglich, die von einer gemeinsamen Versorgungsquelle, beispielsweise einer Druckluftquelle, bei pneumatischer Ausbildung der Kolben-Zylinder-Einheiten, beaufschlagt werden.

Bei einem bevorzugten Ausführungsbeispiel bilden die Begrenzungseinrichtungen im zusammenbewegten Zustand eine Aufnahmewanne. Hierdurch ist eine dem Schlachttierkörper angepaßte Aufnahme vorgesehen.

Die durch die Begrenzungseinrichtungen gebildete Aufnahmewanne weist neben der für den Durchlaß der Schlachttierkörperextremitäten notwendigen unteren Wannenöffnung eine obere, sich zumindest über den Kopfaufnahmebereich erstreckende Wannenöffnung auf, so daß ein einfaches, zielsicheres Ansetzen der Elektroden beim Betäubungsvorgang möglich ist.

Bei einer besonders vorteilhaften Ausgestaltung der Aufnahmewanne weist diese einen Rumpfaufnahmebereich mit ausgehend vom oberen Wannenrand bogenförmig einander annähernden Begrenzungsbereichen, daran nach unten bis zum unteren Wannenrand anschließend einen Beinaufnahmebereich mit in Abstand voneinander im wesentlichen parallel zueinander verlaufenden Begrenzungsbereichen neben dem nach vorne über den Rumpfaufnahmebereich sich hinausgehend erstreckenden Kopfaufnahmebereich auf. Durch die derart ausgebildete Aufnahmewanne ist eine besonders schonende Aufnahme des Schlachttierkorpus in der Aufnahmewanne möglich. Durch das Auslaufen des Rumpfaufnahmebereichs in einen Beinaufnahmebereich mit im wesentlichen parallel ausgebildeten Begrenzungsbereichen wird verhindert, daß es am unteren Rand des Rumpfaufnahmebereichs zu etwaigen Verletzungen an den Schlachttieren kommen könnte.

Um eine besonders wirksame Immobilisierung des Schlachttiers in der Aufnahmewanne zu erreichen, können die Begrenzungseinrichtungen mit Einschnürungen versehen sein, die eine Taillierung der Aufnahmewanne bilden.

Anhand der Zeichnungen wird nachfolgend ein bevorzugtes Ausführungsbeispiel der erfindungsgemäßen Betäubungsbox näher erläutert. Es zeigen:
- **Fig. 1**: eine Betäubungsbox mit einem darin aufgenommenen Schwein in einer perspektivischen Darstellung;
- **Fig. 2**: die Betäubungsbox gemäß **Fig. 1** in einer Seitenansicht;
- **Fig. 3**: die Betäubungsbox gemäß **Fig. 1** in einer Draufsicht;
- **Fig. 4**: die Betäubungsbox in einer Schnittdarstellung gemäß Schnittlinienverlauf IV-IV in **Fig. 3** unter Darstellung der Schwenkbewegung der verschwenkbaren Begrenzungseinrichtung.

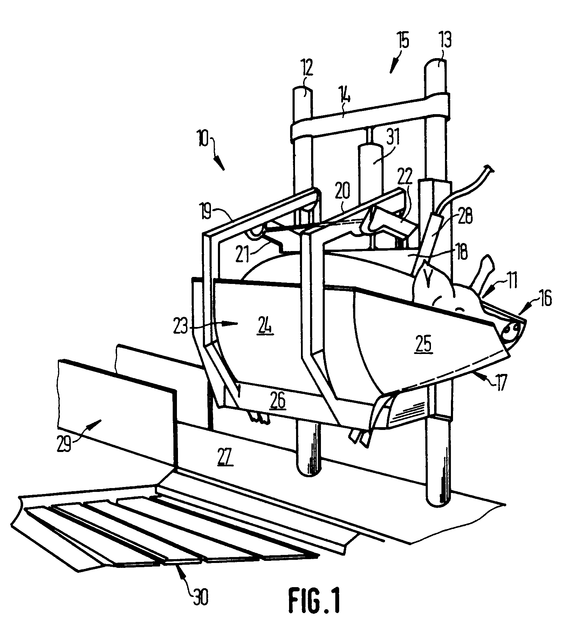

**Fig. 1** zeigt eine erfindungsgemäße Betäubungsbox 10 mit einem darin zur Betäubung aufgenommenen Schlachttier 11. Die Betäubungsbox 10 weist ein aus zwei Standsäulen 12, 13 und ein diese in deren oberen Bereich verbindendes Joch 14 gebildetes Hubgestell 15 auf.

Weiterhin weist die Betäubungsbox 10 zwei seitliche Begrenzungseinrichtungen 16, 17 auf, von denen die dem Hubgestell 15 benachbart angeordnete Begrenzungseinrichtung 16 über einen Führungsrahmen 18 mit dem Hubgestell verbunden ist. Gegenüber dem Führungsrahmen 18 bzw. der Begrenzungseinrichtung 16 ist die gegenüberliegende Begrenzungseinrichtung 17 schwenkbar angeordnet.

Zur Verschwenkung gegenüber der Begrenzungseinrichtung 16 weist die Begrenzungseinrichtung 17 Auslegerarme 19, 20 auf, die schwenkbar an Auslegerarmen 21, 22 des Führungsrahmens 18 angelenkt sind.

Zur Aufnahme des Schlachttiers 11 bilden die Begrenzungseinrichtungen 16, 17 zusammen eine Aufnahmewanne 23. Die Begrenzungseinrichtungen 16, 17 sind im wesentlichen symmetrisch zur Längsachse der Betäubungsbox 10 ausgebildet und weisen jeweils eine im wesentlichen wie eine Zylindermantelviertelfläche ausgebildete Rumpfaufnahmebereichswandung 24, eine sich verjüngend daran anschließende, im wesentlichen wie eine Kegelviertelfläche ausgebildete Kopfaufnahmebereichswandung 25 und eine im wesentlichen eben ausgebildete Beinaufnahmebereichswandung 26 auf. Bei dem in **Fig. 1** dargestellten Zustand ist die Begrenzungseinrichtung 17 zur Aufnahme des Schlachttiers 11 gegen die Begrenzungseinrichtung 16 verschwenkt. Dabei bilden die jeweils einander gegenüberliegenden Rumpfaufnahmebereichswandungen 24 einen Rumpfaufnahmebereich, die beiden gegenüberliegenden Kopfaufnahmebereichswandungen 25 einen Kopfaufnahmebereich und die beiden gegenüberliegend angeordneten Beinaufnahmebereichswandungen 26 einen Beinaufnahmebereich für das Schlachttier 11.

Die Aufnahmewanne 23 ist mittels eines zwischen dem Joch 14 des Hubgestells 15 und dem Führungsrahmen 18 wirkenden Hubzylinders 31 gegenüber einer Einlaufebene 27 angehoben, so daß das Schlachttier 11 für die nachfolgende Betäubung mittels einer am Hubgestell 15 angeordneten Betäubungseinrichtung 28 immobilisiert ist.

Neben dem bereits erläuterten, ist in **Fig. 1** ein im wesentlichen in einer Ebene mit der Einlaufebene 27 ausgebildeter Treibgang 29 zu erkennen, durch den das Schlachttier 11 in die Betäubungsbox 10 hineingetrieben werden kann. Der schwenkbaren Begrenzungseinrichtung 17 gegenüberliegend befindet sich ein Plattenförderer 30, auf den das Schlachttier 11 nach erfolgter Betäubung und Aufschwenken der Begrenzungseinrichtung 17 zur Weiterförderung ausgegeben werden kann.

Wie weiterhin aus **Fig. 1** zu ersehen ist, ist aufgrund der zweiteiligen, aus den beiden Begrenzungseinrichtungen 16, 17 bestehenden Ausbildung der Aufnahmewanne 23 nicht nur ein freier Zugang von oben zur Betäubung des Schlachttiers 11 möglich, sondern auch insbesondere im Kopfbereich des Schlachttiers von unten her. Daher ist es denkbar, nach erfolgter Betäubung des Schlachttiers 11, das noch in der Aufnahmewanne 23 befindliche Schlachttier 11 noch vor der Ausgabe an den Plattenförderer 30 abzustechen.

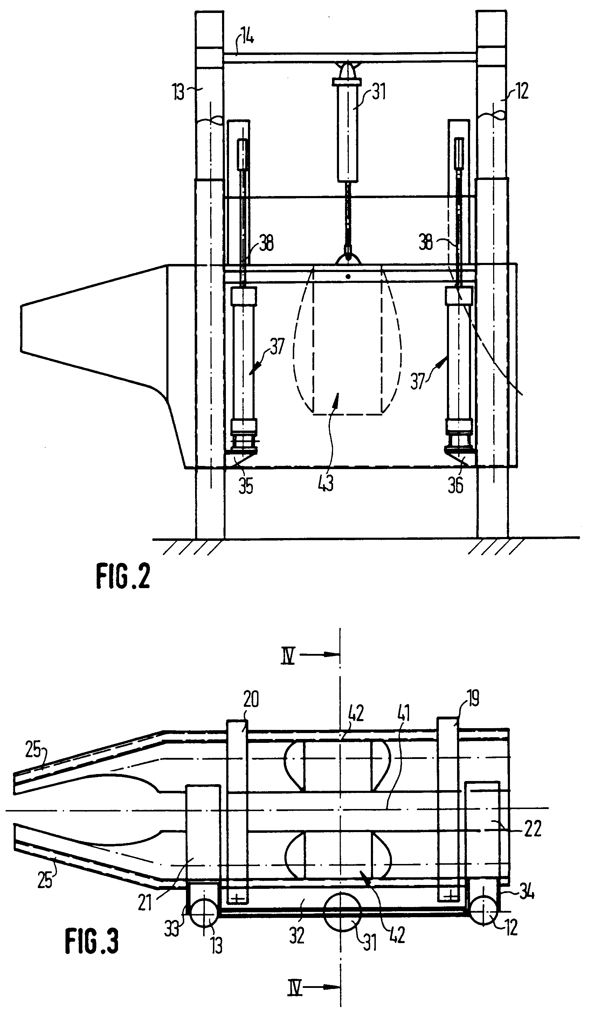

**Fig. 2** zeigt die Betäubungsbox 10 in einer von **Fig. 1** ausgehend rückwärtigen Ansicht. **Fig. 3** zeigt die entsprechende Draufsicht. Wie aus **Fig. 2** zu ersehen ist, ist an dem Joch 14 des Hubgestells 15 die Kolben-Zylinder-Einheit 31 angelenkt, die zwischen dem Joch 14 und einem oberen Rahmenteil 32 des Führungsrahmens 18 wirkt. Das Rahmenteil 32 ist, wie aus der Darstellung gemäß **Fig. 3** zu ersehen ist, mit zwei U-förmig ausgebildeten Führungsprofilen 33, 34 des Führungsrahmens 18 verbunden. Die Führungsprofile 33, 34 dienen zur Längsführung des Führungsrahmens 18 bzw. der mit dem Führungsrahmen 18 verbundenen Begrenzungseinrichtung 16 bei einer Hub- oder Absenkbewegung der Kolben-Zylinder-Einheit 31.

Die Führungsprofile 33, 34 sind in ihrem unteren Bereich mit einander gegenüberliegend angeordneten Stützpodesten 35, 36 versehen, an denen abstützend jeweils eine Kolben-Zylinder-Einheit 37 angelenkt ist, die, wie aus einer Zusammenschau der **Fig. 2** und 3 deutlich wird, mit ihren Kolbenstangen 38 an den jeweils als Doppelhebel ausgebildeten Auslegerarmen 19 und 20 angelenkt sind.

Darüber hinaus sind die Auslegerarme 19, 20 über eine Schwenkachse 40 mit den Auslegerarmen 21, 22 schwenkbar verbunden, die ihrerseits mit dem Führungsrahmen 18 bzw. den Führungsprofilen 33, 34 verbunden sind.

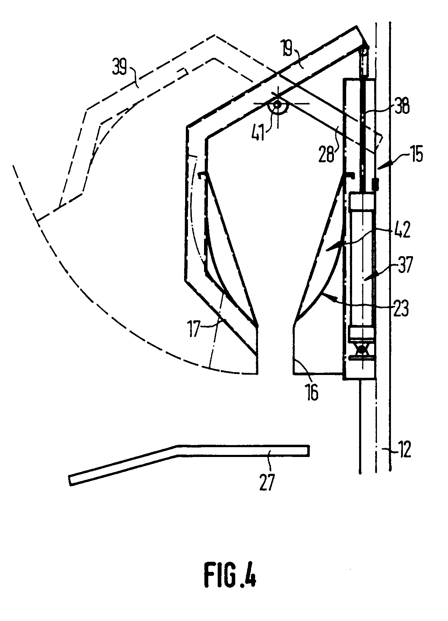

Aus der Darstellung in **Fig. 4** sind die mittels Aktivierung der Kolben-Zylinder-Einheiten 37 durchführbaren Schwenkbewegungen der schwenkbaren Begrenzungseinrichtung 17 gegenüber der mit dem Führungsrahmen 18 verbundenen Begrenzungseinrichtung 16 zu ersehen.

Anhand der in **Fig. 4** dargestellten unterschiedlichen Schwenkstellungen der Begrenzungseinrichtung 17 soll nachfolgend der Betrieb der Betäubungsbox 10 näher erläutert werden.

Im Ausgangszustand, also vor dem Betreten des Schlachttiers 11 des Betäubungsboxbereichs befindet sich die Begrenzungseinrichtung 17 in der durch den strichpunktierten Linienverlauf dargestellten Lage. Hierbei sind die in aufeinanderzu geschwenktem Zustand den Kopfaufnahmebereich ergebenden Kopfaufnahmebereichswandungen 25 (**Fig. 3**) soweit voneinander entfernt, daß das Schlachttier in Längsrichtung der Betäubungsbox 10 gesehen freie Durchsicht hat und kein wesentliches Hindernis in Durchsichtrichtung erkennt.

Nachdem das Schlachttier vom Treibgang 29 (**Fig. 1**) herkommend die Einlaufebene 27 betreten hat und sich im Betäubungsboxbereich befindet, wird die Begrenzungseinrichtung 17 mittels der auf die Auslegerarme 19, 20 wirkenden Kolben-Zylinder-Einheiten 37 in ihren Schließzustand verschwenkt. Dabei ist dann, wie in **Fig. 3** dargestellt, der aus den gegeneinander verschwenkten Kopfaufnahmebereichswandungen 25 bestehende Kopfaufnahmebereich gebildet, und das Schlachttier so sicher in der Aufnahmewanne 23 aufgenommen, daß ein Ausweichen des Schlachttiers nach vorne oder hinten nicht mehr möglich ist.

Diese sichernde Aufnahme des Schlachttiers in der Aufnahmewanne 23 kann dadurch weiter unterstützt werden, daß, wie in den **Fig. 2** bis **4** vorgesehen, im Mittelbereich der Rumpfaufnahmebereichswandungen 24 Einschnürungen 42 vorgesehen sind, die zusammen eine Taillierung 43 bilden. Bei einem in der Aufnahmewanne 23 aufgenommenem Schwein ist durch die Taillierung 43 ein Bereich geschaffen, der zwischen dem Vorder- und Hinterschinken des Schweines zu liegen kommt, und somit ein Vor und Zurück des Schweines in Längsachsenrichtung der Betäubungsbox 10 vollends verhindert. In dieser Stellung hat das Schlachttier mit seinen Beinen immer noch Bodenkontakt und steht auf der Einlaufebene 27.

Um eine völlige Immobilisierung des Schlachttiers in der Betäubungsbox 10 zu erreichen, wird anschließend die Aufnahmewanne 23 mittels der in **Fig. 2** dargestellten, zwischen dem Joch 14 des Hubgestells 15 und dem oberen Rahmenteil 32 des Führungsrahmens 18 wirkenden Kolben-Zylinder-Einheit 31 angehoben, so daß das Schlachttier allmählich den Bodenkontakt verliert, in der Aufnahmewanne 23 nach unten rutscht und seitlich eingeklemmt wird. In diesem angehobenen Zustand der Aufnahmewanne 23 wird schließlich die eigentliche Betäubung mittels der in **Fig. 1** beispielhaft dargestellten Betäubungseinrichtung 28 durchgeführt.

Nach dem Betäubungsvorgang kann nunmehr das Schlachttier durch Aufschwenken der Begrenzungseinrichtung 17 in die in **Fig. 4** mit gestricheltem Linienverlauf dargestellte Position aus erhöhter Hubposition auf den benachbart angeordneten, hier als Plattenförderer 30 ausgebildeten Entbluteförderer ausgegeben werden.

Die in der beispielhaft anhand der **Fig. 1** bis **4** erläuterten Ausführungsform der Betäubungsbox vorgesehenen Begrenzungseinrichtungen 16, 17 bestehen aus Blechwandungen, die aufgrund ihrer glatten Oberflächen besonders einfach zu reinigen sind und daher den für Schlachthöfe bestehenden Hygieneanforderungen leicht gerecht werden. Natürlich ist es auch möglich, die Begrenzungseinrichtungen nicht als in sich geschlossene Flächen auszubilden, sondern mehr oder weniger transparent, etwa als Rohrkonstruktion zu gestalten. Dies erweist sich besonders dann als vorteilhaft, wenn auch ein seitlicher Zugriff auf das in der Betäubungsbox aufgenommene Schlachttier ermöglicht werden soll. Darüber hinaus kann durch eine "transparente" Gestaltung der Aufnahmewanne die bei Schlachttieren bestehende Hemmschwelle vor dem Betreten der Betäubungsbox noch weiter reduziert werden.

## Patentansprüche

1. Betäubungsbox für das Betäuben von Schlachttieren, insbesondere Schweinen, mit einem seitliche Begrenzungseinrichtungen sowie einen sich verjüngend begrenzten Kopfaufnahmebereich aufweisenden Aufnahmeraum zur Aufnahme eines Schlachttiers während des Betäubungsvorgangs, wobei zumindest eine Begrenzungseinrichtung auf eine andere gegenüberliegende Begrenzungseinrichtung zu bewegbar ist und die Begrenzungseinrichtungen in aufeinanderzu bewegtem Zustand eine nach unten aufeinanderzu laufende Kontur aufweisen,
**dadurch gekennzeichnet,** daß
- der Kopfaufnahmebereich durch in aufeinanderzu bewegtem Zustand der Begrenzungseinrichtungen (16,17) nach vorne aufeinanderzu laufende Endbereiche (25) der Begrenzungseinrichtungen (16,17) gebildet ist; und
- die Begrenzungseinrichtungen (16,17) in aufeinanderzu bewegtem Zustand einen unteren öffnungsbereich aufweisen und gegenüber einer Einlaufebene (27), auf der sich das Schlachttier (11) bei Betreten des Betäubungsboxbereiches befindet, zur Immobilisierung des Schlachttiers (11) anhebbar sind.

2. Betäubungsbox nach Anspruch 1,
**dadurch gekennzeichnet,**
daß die Begrenzungseinrichtungen (16,17) in einem vorzugsweise zwei Standsäulen (12,13) aufweisenden Hubgestell (15) angeordnet sind.

3. Betäubungsbox nach Anspruch 2,
**dadurch gekennzeichnet,**
daß das Hubgestell (15) seitlich versetzt zu dem von den Begrenzungseinrichtungen (16,17) begrenzten Aufnahmeraum (23) vorgesehen ist.

4. Betäubungsbox nach Anspruch 3,
**dadurch gekennzeichnet,**
daß die abseits des Hubgestells (15) angeordnete Begrenzungseinrichtung (17) gegenüber der dem Hubgestell (15) benachbart angeordneten Begrenzungseinrichtung (16) verschwenkbar ist.

5. Betäubungsbox nach Anspruch 4,
**dadurch gekennzeichnet,**
daß die schwenkbare Begrenzungseinrichtung (17) um eine oberhalb des Aufnahmeraums (23) verlaufende Schwenkachse (41) schwenkbar ist.

6. Betäubungsbox nach einem der vorangehenden Ansprüche,
**dadurch gekennzeichnet,**
daß die dem Hubgestell (15) benachbarte Begrenzungseinrichtung (16) auf der dem Aufnahmeraum (23) abgewandten Seite mit einem Führungsrahmen (18) versehen ist, der bei einer Auf- oder Ab-Bewegung zur Führung längs der Standsäulen (12,13) dient.

7. Betäubungsbox nach Anspruch 6,
**dadurch gekennzeichnet,**
daß der Führungsrahmen (18) mit zumindest einem Auslegerarm (21 oder 22) versehen ist, um den die schwenkbare Begrenzungseinrichtung (17) schwenkbar ist.

8. Betäubungsbox nach Anspruch 7,
**dadurch gekennzeichnet,**
daß die schwenkbare Begrenzungseinrichtung (17) mit zumindest einem als Doppelhebel ausgebildeten Auslegerarm (19 oder 20) am Auslegerarm (21 oder 22) des Führungsrahmens (18) schwenkbar gelagert ist, wobei das freie Ende des Doppelhebels durch zumindest eine am Führungsrahmen (18) angelenkte Kolben-Zylinder-Einheit (37) beaufschlagbar ist.

9. Betäubungsbox nach einem oder mehreren der vorangehenden Ansprüche,
**dadurch gekennzeichnet,**
daß zur Auf-und-Ab-Bewegung des Führungsrahmens (18) bzw. der damit verbundenen Begrenzungseinrichtungen (16,17) im Hubgestell (15) eine Kolben-Zylinder-Einheit (31) vorgesehen ist.

10. Betäubungsbox nach einem oder mehreren der vorangehenden Ansprüche,
**dadurch gekennzeichnet,**
daß die Begrenzungseinrichtungen (16,17) in zusammenbewegtem Zustand eine den Aufnahmeraum bildende Aufnahmewanne (23) bilden.

11. Betäubungsbox nach Anspruch 10,
**dadurch gekennzeichnet,**
daß die Aufnahmewanne (23) neben der durch den unteren Öffnungsbereich gebildeten unteren Wannenöffnung eine obere Wannenöffnung aufweist, die sich zumindest über den Kopfaufnahmebereich (25) erstreckt.

12. Betäubungsbox nach Anspruch 10,
**dadurch gekennzeichnet,**
daß die Aufnahmewanne (23) einen Rumpfaufnahmebereich mit ausgehend vom oberen Wannenrand bogenförmig einander annähernden Rumpfaufnahmebereichswandungen (24), daran nach unten bis zum unteren Wannenrand anschließend einen Beinaufnahmebereich mit in Abstand voneinander im wesentlichen parallel zueinander verlaufenden Beinaufnahmebereichswandungen (26) und den über den Rumpfaufnahmebereich (45) nach vorne hinausgehenden Kopfaufnahmebereich mit konvergent verlaufenden Kopfaufnahmebereichswandungen (25) aufweist.

13. Betäubungsbox nach einem oder mehreren der vorangehenden Ansprüche,
**dadurch gekennzeichnet,**
daß die Aufnahmewanne (23) eine aus Einschnürungen (42) in den Begrenzungseinrichtungen (16,17) gebildete Taillierung (43) aufweist.

## Claims

1. A stunning box for stunning animals to be slaughtered, in particular hogs, comprising a receiving space for receiving an animal during the stunning operation, said receiving space having lateral confining means as well as a head receiving portion confined in tapering manner, at least one of said confining means being movable towards another, opposite confining means and said confining means, in their condition in which they are moved towards each other, having an outline extending towards each other in downward direction,
characterized in that
- the head receiving portion is constituted by end portions (25) of the confining means (16, 17), said end portions (25) extending in forward direction towards each other when said confining means (16, 17) are in their condition in which they are moved towards each other; and
- the confining means (16, 17), in their condition in which they are moved towards each other, have a lower opening portion and are adapted to be lifted with respect to an entrance plane (27), on which the animal (11) to be slaughtered is located upon entering the stunning box region, for immobilization of the animal (11) to be slaughtered.

2. A stunning box according to claim 1,
characterized in that the confining means (16, 17) are disposed in a lifting framework (15) having preferably two upright pillars (12, 13).

3. A stunning box according to claim 2,
characterized in that the lifting framework (15) is provided in laterally offset manner from the receiving space (23) confined by said confining means (16, 17).

4. A stunning box according to claim 3,
characterized in that the confining means (17) disposed remote from the lifting framework (15) is pivotable with respect to the confining means (16) disposed adjacent the lifting framework (15).

5. A stunning box according to claim 4,
characterized in that the pivotable confining means (17) is pivotable about a pivot axis (41) extending above the receiving space (23).

6. A stunning box according to any one of the preceding claims,
characterized in that the confining means (16) adjacent said lifting framework (15) is provided on the side facing away from the receiving space (23) with a guide frame (18) serving for guiding purposes along said upright pillars (12, 13) during upward or downward motion.

7. A stunning box according to claim 6,
characterized in that the guide frame (18) is provided with at least one extension arm (21 or 22) about which said pivotable confining means (17) is pivotable.

8. A stunning box according to claim 7,
characterized in that said pivotable confining means (17) is pivotably supported on the extension arm (21 or 22) of the guide frame (15) by way of at least one extension arm (19 or 20) formed as a twin lever, with the free end of the twin lever being adapted to be acted upon by at least one piston and cylinder unit (37) pivoted to the guide frame (18).

9. A stunning box according to one or several ones of the preceding claims,
characterized in that a piston and cylinder unit (31) is provided in the lifting framework (15) for upward and downward movement of the guide frame (18) and the confining means (16, 17) connected thereto, respectively.

10. A stunning box according to one or several ones of the preceding claims,
characterized in that the confining means (16, 17), in the moved together condition, constitute a receiving trough (23) forming said receiving space.

11. A stunning box according to claim 10,
characterized in that said receiving trough (23), in addition to the lower trough opening formed by the lower opening portion, has an upper trough opening extending at least over the head receiving portion (25).

12. A stunning box according to claim 10,
characterized in that the receiving trough (23) has a trunk receiving portion including, starting from the upper trough edge, trunk receiving portion walls (24) extending arcuately towards each other and, following the same downwardly to the lower trough edge, a leg receiving portion having leg receiving portion walls (26) extending substantially parallel to each other in spaced apart manner, as well as the head receiving portion extending forwardly beyond the trunk receiving portion (45) and including head receiving portion walls (25) extending in converging manner.

13. A stunning box according to one or several ones of the preceding claims,
characterized in that the receiving trough (23) comprises a narrowed portion (43) formed by constrictions in the confining means (16, 17).

## Revendications

1. Box d'anesthésie pour l'anesthésie d'animaux de boucherie, en particulier de porcs, comprenant un volume de réception présentant des moyens de délimitation latéraux ainsi qu'une zone de réception de tête délimitée, allant en se rétrécissant, destiné à recevoir un animal de boucherie pendant le processus d'anesthésie, dans lequel au moins un moyen de délimitation peut se rapprocher d'un autre moyen de délimitation qui lui est opposé et les moyens de délimitation présentent, dans l'état rapprochés l'un de l'autre, un contour s'étendant en se rapprochant vers le bas,
caractérisé en ce que
- la zone de réception de tête est formée de zones d'extrémité (25) des moyens de délimitation (16, 17) s'étendant vers l'avant en se rapprochant l'une de l'autre dans l'état rapprochés l'un de l'autre des moyens de délimitation (16, 17); et
- les moyens de délimitation (16, 17) présentent, dans leur état rapprochés l'un de l'autre, une zone d'ouverture inférieure et peuvent être soulevés, pour immobiliser l'animal de boucherie (11), par rapport à un plan d'arrivée (27) sur lequel se trouve l'animal de boucherie (11) lorsqu'il pénètre dans la zone du box d'anesthésie.

2. Box d'anesthésie selon la revendication 1,
caractérisé en ce que
les moyens de délimitation (16, 17) sont disposés dans un châssis de levage (15) présentant de préférence deux colonnes montantes (12, 13).

3. Box d'anesthésie selon la revendication 2,
caractérisé en ce que
le châssis de levage (15) est décalé latéralement par rapport au volume de réception (23) délimité par les moyens de délimitation (16, 17).

4. Box d'anesthésie selon la revendication 3,
caractérisé en ce que
le moyen de délimitation (17) disposé à l'écart du châssis de levage (15) peut pivoter par rapport au moyen de délimitation (16) disposé à proximité du châssis de levage (15).

5. Box d'anesthésie selon la revendication 4,
caractérisé en ce que
le moyen de délimitation pivotant (17) peut pivoter autour d'un axe de pivotement (41) situé au-dessus du volume de réception (23).

6. Box d'anesthésie selon l'une quelconque des revendications précédentes,
caractérisé en ce que
le moyen de délimitation (16) situé à proximité du châssis de levage (15) est pourvu sur son côté opposé au volume de réception (23) d'un cadre de guidage (18) qui sert au guidage le long des colonnes montantes (12, 13) lors d'un mouvement de montée ou de descente.

7. Box d'anesthésie selon la revendication 6,
caractérisé en ce que
le cadre de guidage (18) est pourvu d'au moins une potence (21 ou 22) autour de laquelle peut pivoter le moyen de délimitation pivotant (17).

8. Box d'anesthésie selon la revendication 7,
caractérisé en ce que
le moyen de délimitation pivotant (17) est monté pivotant avec au moins une potence (19 ou 20) conformée en double levier sur la potence (21 ou 22) du cadre de guidage (18), l'extrémité libre du double levier pouvant être actionnée par au moins une unité piston - cylindre (37) articulée sur le cadre de guidage (18).

9. Box d'anesthésie selon l'une ou plusieurs des revendications précédentes,
caractérisé en ce que
une unité piston - cylindre (31) est prévue pour la montée et la descente du cadre de guidage (18), respectivement des moyens de délimitation (16, 17) qui y sont reliés, dans le châssis de levage (15).

10. Box d'anesthésie selon l'une ou plusieurs des revendications précédentes,
caractérisé en ce que
les moyens de délimitation (16, 17) forment dans leur état rapprochés l'un de l'autre une auge de réception (23) formant le volume de réception.

11. Box d'anesthésie selon la revendication 10,
caractérisé en ce que
l'auge de réception (23) présente en plus de l'ouverture d'auge inférieure formée par la zone d'ouverture inférieure, une ouverture d'auge supérieure qui s'étend au moins sur la zone de réception de tête (25).

12. Box d'anesthésie selon la revendication 10,
caractérisé en ce que
l'auge de réception (23) présente une zone de réception de tronc comprenant, en partant du bord supérieur de l'auge des parois de zone de réception de tronc (24) se rapprochant en courbe à laquelle se raccorde vers le bas jusqu'au bord inférieur de l'auge une zone de réception de jambes comprenant des parois de zone de réception de jambes (26) espacées l'une de l'autre, s'étendant sensiblement parallèlement l'une à l'autre et la zone de tête dépassant vers l'avant de la zone de réception de tronc (45) et pourvue de parois de zone de réception de tête (25) s'étendant en convergeant.

13. Box d'anesthésie selon l'une ou plusieurs des revendications précédentes,
caractérisé en ce que
l'auge de réception (23) présente une taille (43) formée par des rétrécissements (42) dans les moyens de délimitation (16, 17).
